# EUROPEAN PATENT SPECIFICATION

(11) **EP 4 406 407 B1**
(45) Date of publication and mention of the grant of the patent: **25.11.2026**
(21) Application number: 24151675.6
(22) Date of filing: 12.01.2024
(51) Int. Cl.: A01G 20/47, A47L 5/14, A47L 5/24, A47L 9/08, E01H 1/08

(54) **HANDHELD ELECTRIC VACUUM DEVICE**
HANDGEFÜHRTES ELEKTRISCHES SAUGGERÄT
ASPIRATEUR ÉLECTRIQUE PORTATIF

(30) Priority: 27.01.2023 JP 2023010960
(43) Date of publication of application: 31.07.2024
(73) Proprietor: Yamabiko Corporation, Ohme-shi Tokyo 198-8760 (JP)
(72) Inventor: UMEKI, Tomohisa, Tokyo, 198-8760 (JP); SUZUKI, Kenji, Tokyo, 198-8760 (JP)
(74) Representative: Wohlfahrt, Jan Günther

(56) References cited:
- EP-B1- 0 823 835
- FR-A1- 2 300 535
- GB-A- 2 311 462
- US-A1- 2021 282 339

## Description

### BACKGROUND

### Technical Field

The present invention relates to a handheld electric vacuum configured to perform sucking work to suck in dust and debris.

### Background Art

A "vacuum" is understood by the skilled person in general as a vacuum device to suck and/or to blow, especially a vacuum cleaner and/or a vacuum blower. There is known a conventional technique of a vacuum used in work to suck in and collect dust and debris such as fallen leaves (hereinafter referred to as "sucking work") disclosed, for example, in Patent Literature 1. The conventional vacuum disclosed in Patent Literature 1 is a handheld electric vacuum configured to perform sucking work, including: a pipe including a suction port at one end and a discharge port at the other end; a blower fan provided outside the pipe and driven by an electric motor; a handle provided outside the pipe and near the discharge port in a longitudinal direction of the pipe, and configured to be held by a hand; and an ejector provided near the suction port in the longitudinal direction of the pipe, and configured to feed pressurized wind generated by the blower fan into the pipe from around the pipe, and to eject the pressurized wind to the discharge port. A battery configured to supply the electric motor with power is attached to the outside of the pipe near the discharge port. The handle is located between a center of gravity of the battery and a center of gravity of the blower fan.

In the above-described handheld electric vacuum, the pressurized wind ejected from the ejector passes through the inside of the pipe along the inner surface of the pipe and is ejected to the discharge port. This pressurized wind causes the pressure inside the pipe to be lowered, thereby to generate suction flow (negative pressure) in the pipe from the suction port toward the discharge port. Accordingly, the handheld electric vacuum sucks in dust and so forth into the pipe from the suction port provided at one end of the pipe, and discharges the sucked objects such as the dust from the discharge port provided at the other end of the pipe to collect the sucked objects in a collector such as a bag attached to the discharge port.

### Citation List

### Patent Literature

Patent Literature 1: JP 2022-114780 A
Patent Literature 2: US 2021/0282339 A
Patent Literature 3: EP 0 823 835 B1

### SUMMARY

In the conventional handheld electric vacuum disclosed in Patent Literature 1, a blower fan and a fan casing (hereinafter referred to simply as a casing) of the blower fan formed as a volute, which are heavy in weight, are disposed along the periphery of the pipe at the positions far from the handle to be held by a hand. Thus, the conventional vacuum may put a large load on an operator during work, reduce operability, and the like.

Then, the blower fan and the casing that are heavy in weight may be disposed at the positions near the handle to be held by a hand (see, for example, Patent Literature 2). However, placing the major components, such as the blower fan, the casing, and the battery, intensively near the handle may narrow the space around the grip portion (i.e., portion gripped by an operator for operation) of the handle, causing a lower operability and workability. In addition, the structure may become more complicated or larger to ensure a space around the grip portion of the handle (see, for example, Patent Literature 2). In particular, in an attempt to ensure a larger space around the grip portion of the handle, the heavy components such as the blower fan and the battery may be disposed at the positions spaced from the handle. However, this causes another issue that the operation may not be performed in good balance.

The present invention has been made in view of the above issue, and it is an object of the present invention to provide a handheld electric vacuum capable of improving the operability and workability while reducing the likelihood of the structure becoming more complicated or larger by optimizing the layout configuration around the handle, including the blower fan, the casing, and the battery.

To address the above issue, the handheld electric vacuum according to the present invention is defined in claim 1.

In a preferred aspect, the handle includes a lower side portion extending from the lower side of the blower fan to a base end side of the handheld electric vacuum, an upper side portion extending from the upper side of the blower fan to the base end side of the handheld electric vacuum, and a vertical side portion extending from a base end portion of the lower side portion to a base end portion of the upper side portion to form the opposing portion facing the blower fan, and the lower side portion, the upper side portion, and the vertical side portion form the space on the base end side of the blower fan.

In another preferred aspect, an upper portion of the handle and the pressure flow path are continuously formed.

In further preferred aspect, the upper portion of the handle and the pressure flow path are continuously formed in a straight line shape along the axis.

**In** still another preferred aspect, the upper portion of the handle includes a curved portion projecting upward, and a front end of the curved portion of the upper portion of the handle and the pressure flow path are continuously formed in a straight line shape along the axis.

**In** yet another preferred aspect, the battery is attached to the opposing portion of the handle by sliding from an upper side to a lower side with an inclination opposite to an inclination of the blower fan with respect to the axis.

In yet another preferred aspect, a control board of the blower fan is housed in a lower portion of the handle.

In yet another preferred aspect, an operating member is provided in an upper portion of the handle and is configured to adjust a rotating speed of the electric motor of the blower fan.

In yet another preferred aspect, a connecting wall connecting the pressure flow path and the pipe includes a through-hole that allows a portion of the pressure flow path to be used as a sub-handle to be held by a hand.

In yet another preferred aspect, the pressure flow path extends from the upper side of the blower fan to near the suction port of the pipe and is inclined with respect to the axis so as to come closer to the pipe from the base end to the front end; and the connecting wall connecting a lower side of the pressure flow path and an upper side of the pipe includes the through-hole.

According to the present invention, the blower fan is inclined forwardly along the bending portion and disposed on the base end side of the bending portion provided at the base end of the pipe. In addition, the opposing portion (vertical side portion) of the handle incorporating the battery, facing the blower fan is inclined (inclined backwardly) oppositely to the blower fan. The upper length (near the grip portion) of the space of the handle formed on the base end side of the blower fan is greater than the lower length thereof. Accordingly, even when the blower fan, the casing, the battery, and the like, which are heavy in weight, are placed near the handle, it is possible to ensure the space for the grip portion of the handle without causing the structure to become more complicated or larger. Thus, it is possible to improve the operability and workability while reducing the likelihood of the structure becoming more complicated or larger.

### BRIEF DESCRIPTION OF THE DRAWINGS

FIG. 1 is an external perspective view of a handheld electric vacuum according to an embodiment of the present invention as viewed obliquely from the front side;
FIG. 2 is an external perspective view of the handheld electric vacuum according to the embodiment of the present invention as viewed obliquely from the back side;
FIG. 3 is a side view of the handheld electric vacuum according to the embodiment of the present invention;
FIG. 4 is a top view of the handheld electric vacuum according to the embodiment of the present invention;
FIG. 5 is a bottom view of the handheld electric vacuum according to the embodiment of the present invention;
FIG. 6 is a vertical cross-sectional view of the handheld electric vacuum according to the embodiment of the present invention (a sucking state: a vacuum mode); and
FIG. 7 is a vertical cross-sectional view of the handheld electric vacuum according to the embodiment of the present invention (a blowing state: a blower mode).

### DETAILED DESCRIPTION

Hereinafter, an embodiment of the present invention will be described with reference to the drawings. In the following description, the same reference numbers in the different drawings indicate the same functional sections, and therefore repeated description for each of the drawings will be omitted.

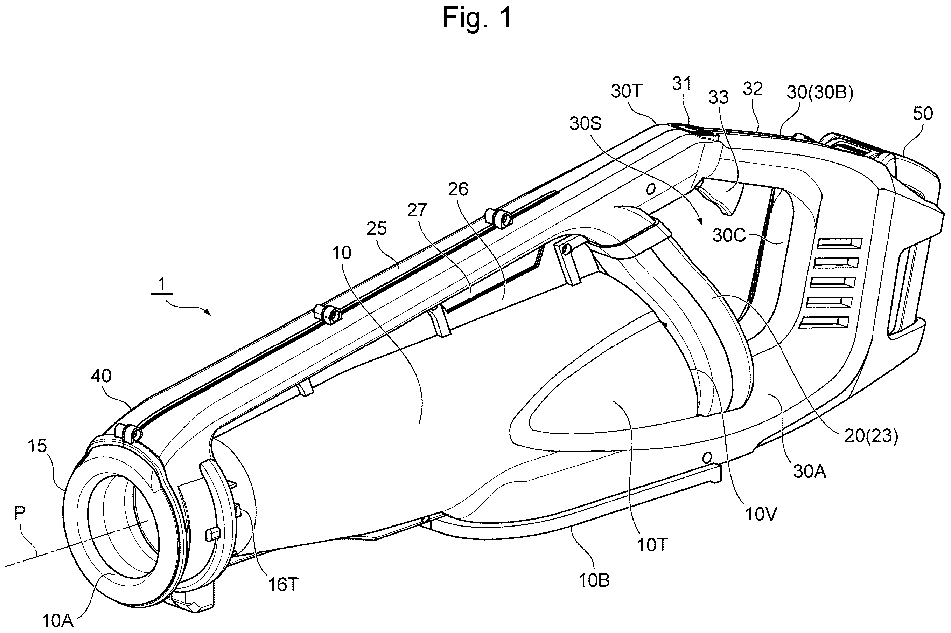

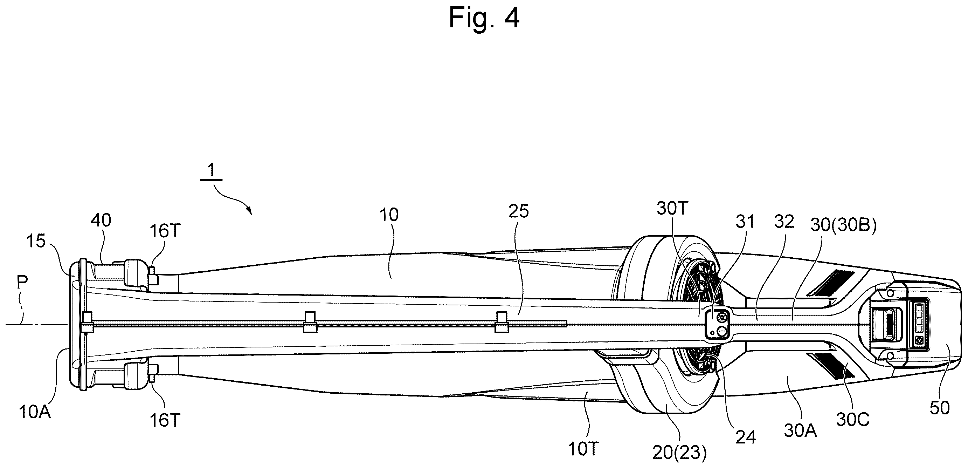

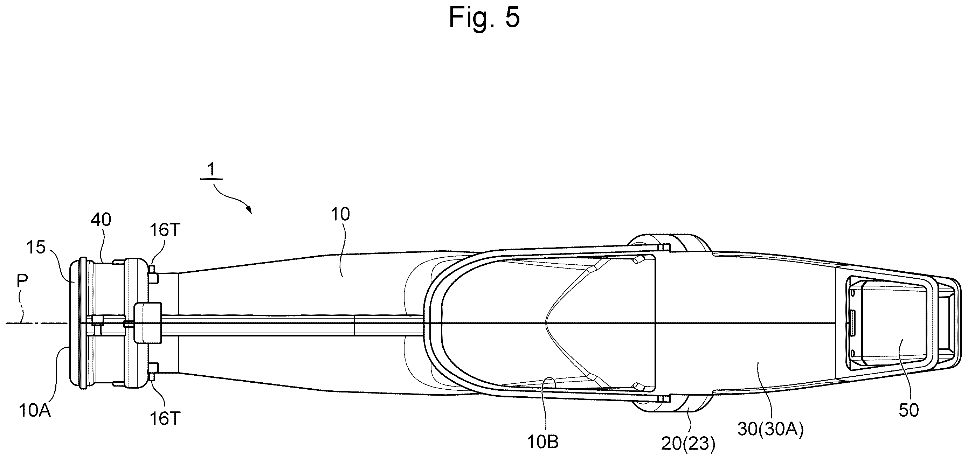

As shown in FIG. 1 to FIG. 7, a handheld electric vacuum (hereinafter this may be simply referred to as a vacuum) 1 of the present embodiment is a handheld working machine for sucking work, and includes a pipe 10 configured to suck in dust and debris, a blower fan 20, a handle 30, and a nozzle 40.

The pipe 10 includes a suction port 10A at one end (front end) and a discharge port 10B at the other end (base end), and is configured to suck in objects from the suction port 10A into the pipe 10 and discharge the sucked objects from the discharge port 10B. During the sucking work, a collecting bag and so forth (not shown) is attached to the discharge port 10B to collect the sucked objects.

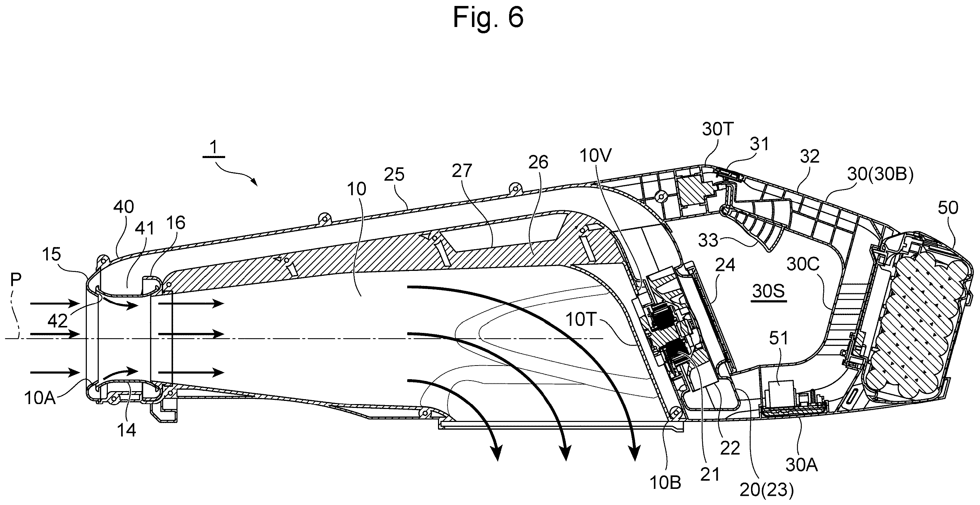

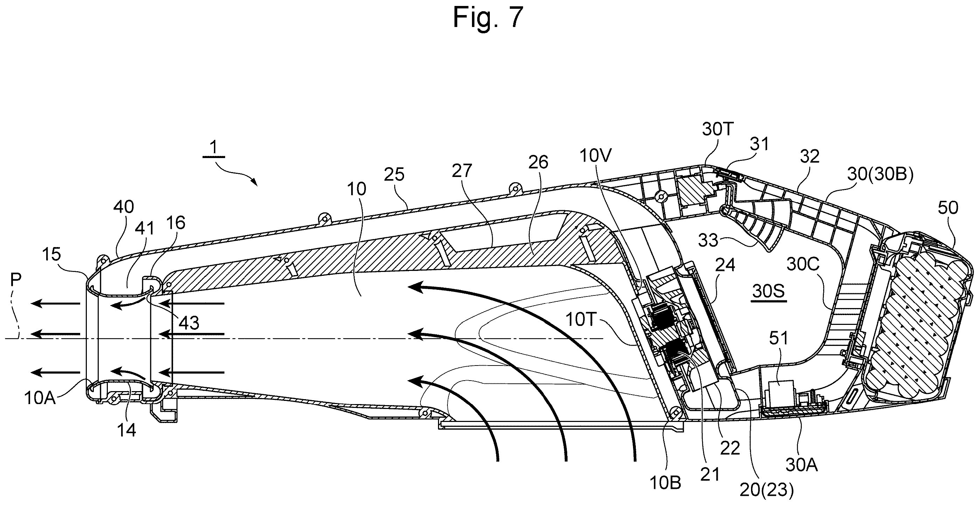

The inside diameter of the pipe 10 over the entire length of the pipe 10 is equal to or greater than the bore of the suction port 10A (see FIG. 6 and FIG. 7). By this means, all the objects sucked from the suction port 10A into the pipe 10 are smoothly fed to the discharge port 10B with a little resistance.

In the present embodiment, the pipe 10 includes a bending portion 10T at the base end. That is, the pipe 10 extends along a central axis P (axis) of the pipe 10 from the front end including the suction port 10A to the base end including the bending portion 10T. The bending portion 10T is inclined (inclined forwardly) with respect to the central axis P of the pipe 10, thereby to form the entire pipe in an L-shape. The other opening (herein, the lower end opening) of the bending portion 10T is the discharge port 10B. The suction port 10A at the front end is open toward the front, and the discharge port 10B at the base end is open toward the bottom. In addition, in the present embodiment, the base end of the pipe 10 (or the bending portion 10T thereof) includes a plane 10V that is inclined (inclined forwardly) with respect to the central axis P of the pipe 10 along the bending portion 10T. This plane 10V is a surface on which the blower fan 20 is placed, which will be described later.

The blower fan 20 is provided outside the pipe 10. The blower fan 20 is inclined forwardly along the bending portion 10T and disposed on the placement surface 10V of the bending portion 10T formed at the base end of the pipe 10. With reference to FIG. 6 and FIG. 7, the blower fan 20 is a centrifugal blower fan driven by a built-in electric motor 21, and is disposed such that the driving shaft of the electric motor 21 is coaxial with the rotating shaft of a fan 22 with a slight inclination with respect to the central axis P of the pipe 10. A casing 23 of the blower fan 20 formed as a volute is disposed along the placement surface 10V of the pipe 10. Wind sucked from a sucking portion 24 by the rotation of the fan 22 passes through the casing 23 and is fed, as compressed air, into a pressure flow path 25 disposed outside of the pipe 10. Here, a compressor may be adopted instead of the illustrated centrifugal blower fan, as long as it can feed the compressed air.

The pressure flow path 25 is provided outside the pipe 10. More specifically, the pressure flow path 25 is disposed on the upper side of the pipe 10. The pressure flow path 25 is configured to feed pressurized wind generated by the blower fan 20 to the nozzle 40 provided near the suction port 10A of the pipe 10 to feed the pressurized wind generated by the blower fan 20 into the pipe 10 from around the pipe 10 and eject the pressurized wind to the discharge port 10B. In the present embodiment, the pressure flow path 25 extends substantially linearly from the upper side of the casing 23 (blower fan 20) to near the suction port 10A of the pipe 10 and is inclined (inclined forwardly) with respect to the central axis P so as to come closer to the pipe 10 as it approaches the front (from the base end to the front end).

The handle 30 to be held by a hand is provided outside the pipe 10 and near the discharge port 10B in the longitudinal direction of the pipe 10. In the present embodiment, the handle 30 has a lateral U-shape, and is disposed between the upper side of the casing 23 (blower fan 20), that is, the base end of the pressure flow path 25, and the lower side of the casing 23 (blower fan 20). With this shape, the handle 30 includes a space 30S having a predetermined size on the base end side of the blower fan 20 (or the sucking portion 24 thereof).

More specifically, the handle 30 includes a lower side portion 30A extending from the lower side of the casing 23 (blower fan 20) to the base end side of the handheld electric vacuum 1, an upper side portion 30B extending from the upper side of the casing 23 (blower fan 20) to the base end side of the handheld electric vacuum 1, and a vertical side portion 30C extending from the base end portion of the lower side portion 30A to the base end portion of the upper side portion 30B to connect the lower side portion 30A and the upper side portion 30B. The space 30S defined (surrounded) by the lower side portion 30A, the upper side portion 30B, and the vertical side portion 30C is formed on the base end side of the blower fan 20 (or the sucking portion 24 thereof). The vertical side portion 30C on the base end side of the handle 30 is disposed to substantially face the blower fan 20 with the space 30S interposed therebetween (opposing portion).

With reference to FIG. 6 and FIG. 7, the lower side portion 30A of the handle 30 serves as a housing of a control board (also referred to as a drive circuit) 51 of the blower fan 20. In other words, the control board 51 of the blower fan 20 is housed in the lower side portion 30A of the handle 30.

The upper side portion 30B of the handle 30 is a grip 32 held by mainly an operator. A switch 31 is provided on the outside (the upper side) of the grip 32 and is configured to switch on and off the electric motor 21 for driving the blower fan 20. An operating lever 33 is provided on the inside (the lower side) of the grip 32 as an operating member configured to adjust the rotating speed of the electric motor 21 of the blower fan 20. In the present embodiment, the upper side portion 30B of the handle 30 has a mountain shape including a curved portion 30T projecting upward near the center in the longitudinal direction. The switch 31 and the operating lever 33 are provided near this curved portion 30T, on the upper and lower sides, respectively.

In the present embodiment, the upper side portion 30B of the handle 30 is formed in a substantially straight line shape so as to be continuous with the pressure flow path 25 provided on the upper side of the pipe 10 along the central axis P of the pipe 10. More specifically, the front end (forwardly-inclined portion) of the curved portion 30T in the upper side portion 30B of the handle 30 and the pressure flow path 25 are continuously formed in a straight line shape along the central axis P of the pipe 10. The switch 31 and the operating lever 33 are provided at the base end (backwardly-inclined portion) of the curved portion 30T in the upper side portion 30B of the handle 30. Note that the base end (backwardly-inclined portion) of the curved portion 30T in the upper side portion 30B of the handle 30 is slightly thinner than the front end (forwardly-inclined portion) of the curved portion 30T. This is because the front end of the curved portion 30T has the pressure flow path 25 formed therein, whereas the base end of the curved portion 30T does not have the pressure flow path 25 formed therein. If a sufficient volume of air to be fed to the front can be ensured, the front end and the base end of the curved portion 30T may have substantially the same thickness. This can avoid the entire structure from becoming larger and further improve the entire appearance.

A battery 50 configured to supply the electric motor 21 with power is attached to the vertical side portion 30C of the handle 30. In the present embodiment, the base end side of the vertical side portion 30C of the handle 30 serves as a housing of the battery 50. In the present embodiment, the vertical side portion 30C of the handle 30 is disposed so as to substantially face the blower fan 20 (or the bending portion 10T) and is inclined (inclined backwardly) oppositely to the blower fan 20 (or the bending portion 10T) with respect to the central axis P of the pipe 10. The battery 50 is configured to be attached to the vertical side portion 30C of the handle 30 on the base end side (housing) by sliding from the upper side to the lower side with an inclination with respect to the central axis P of the pipe 10, and is inclined (inclined backwardly) oppositely to the blower fan 20 (or the bending portion 10T) with respect to the central axis P of the pipe 10.

As described above, the vertical side portion 30C of the handle 30 and the battery 50 attached to the vertical side portion 30C are inclined (inclined backwardly) oppositely to the blower fan 20 (or the bending portion 10T) with respect to the central axis P of the pipe 10. Thus, the upper length (near the upper side portion 30B or grip 32) of the space 30S of the handle 30 is greater than the lower length (near the lower side portion 30A) thereof. Accordingly, even when the major components, such as the blower fan 20, the casing 23, and the battery 50, are placed intensively near the handle 30, it is possible to ensure the space for the grip portion of the handle 30 and the space around it, without causing the structure to become more complicated or larger. In addition, since the heavy components are arranged substantially the same distance from the grip portion in the front and back directions, the balance is always maintained even when the machine position during work changes frequently.

In addition, in the present embodiment, a connecting wall 26 connecting the pipe 10 and the pressure flow path 25 provided outside the pipe 10 is provided therebetween. More specifically, the connecting wall 26 is provided along the central axis P of the pipe 10 to connect the upper side of the pipe 10 and the lower side of the pressure flow path 25. This connecting wall 26 (or its portion near the handle 30) includes a rectangular through-hole 27. With this through-hole 27, the portion of the pressure flow path 25 above the through-hole 27 can be used as a sub-handle to be held by a hand.

The nozzle 40 is provided near the suction port 10A in the longitudinal direction of the pipe 10, and configured to feed pressurized wind generated by the blower fan 20 from around the pipe 10 into the pipe 10 and eject the pressurized wind to the discharge port 10B. The pressurized wind is ejected from the nozzle 40 to the discharge port 10B along the inner surface of the pipe 10. This pressurized wind causes the pressure inside the pipe 10 to be lowered, thereby to generate suction flow in the pipe 10 from the suction port 10A toward the discharge port 10B.

The nozzle 40 includes a circular flow path 41 protruding outward of the pipe 10. The circular flow path 41 is provided circumferentially around the central axis P of the pipe 10. The pressurized wind generated by the blower fan 20 is introduced into the circular flow path 41 via the pressure flow path 25. The pressure flow path 25 is connected above the circular flow path 41.

The circular flow path 41 includes an ejection port 42 that is an opening configured to communicate with the inside of the pipe 10 over the entire circumference around the central axis P of the pipe 10. The pressurized wind is ejected through the ejection port 42 along the inner surface of the pipe 10 (FIG. 6). When ejected to the pipe 10 through the ejection port 42, the pressurized wind may contain a circumferential component. By this means, swirling flow along the inner wall of the pipe 10 is added, thereby to increase suction force near the inner wall of the pipe 10.

In the present embodiment, the nozzle 40 includes an inner pipe 14 inserted into the inside of the circular flow path 41 of the pipe 10. In addition, the nozzle 40 includes a turn portion 15 disposed on the front end side (i.e., the front end portion of the pipe 10) of the circular flow path 41 of the pipe 10, (in an annular shape) around the front end portion of the inner pipe 14. The turn portion 15 is formed in an annular shape around the central axis P of the pipe 10 such that it turns from the outside to the inside of the front end portion of the inner pipe 14 and toward the base end side. In the present embodiment, the turn portion 15 basically includes a (cornerless) continuous curved surface. The inside (inner circumferential surface) of the turn portion 15 is the suction port 10A of the pipe 10, and a gap formed between the turn portion 15 and the inner pipe 14 (or the front end portion thereof) is the ejection port 42 configured to communicate with (i.e., open to) the inside of the pipe 10 in the circular flow path 41. By this means, the pressurized wind is fed from the circular flow path 41 of the nozzle 40 toward the outside of the inner pipe 14, then the pressurized wind fed to the outside of the inner pipe 14 passes between the turn portion 15 and the inner pipe 14 and turns toward the base end at around the front end portion of the inner pipe 14, and is ejected through the ejection port 42 to the discharge port 10B at the base end along the inside (inner circumferential surface) of the inner pipe 14.

The vacuum 1 configured as described above forms suction flow in the pipe 10 from the suction port 10A at one end to the discharge port 10B at the other end. In addition, there is no reduced diameter portion in the pipe 10, and therefore the pipe 10 maintains its inside diameter which is sufficient to allow large sucked objects to pass therethrough along the longitudinal direction.

By this means, the objects sucked by the vacuum 1 from the suction port 10A into the pipe 10 can be efficiently guided to the discharge port 10B, and even when large objects are sucked from the suction port 10A, the sucked objects can be smoothly guided to the discharge port 10B without clogging or the like, and then can be collected.

In addition, the vacuum 1 of the present embodiment can switch between sucking work (also referred to as a vacuum mode) and blowing work (also referred to as a blower mode) by incorporating a simple switching mechanism into the above-described nozzle 40.

As the switching mechanism, the inner pipe 14 is slidably disposed relative to the circular flow path 41. In addition, the nozzle 40 includes a turn portion 16 disposed on the base end side of the circular flow path 41 of the pipe 10, (in an annular shape) around the base end portion of the inner pipe 14. The turn portion 16 is formed in an annular shape around the central axis P of the pipe 10 such that it turns from the outside to the inside of the base end portion of the inner pipe 14 and toward the front end side. In the present embodiment, the turn portion 16 basically includes a (cornerless) continuous curved surface. The inside (inner circumferential surface) of the turn portion 16 is formed to be smoothly continuous to the inner wall of the pipe 10. According to the slide of this inner pipe 14, the opposite end portions of the inner pipe 14 come into contact with or are separated from the turn portions 15, 16 (the turn portions 15, 16 provided at the opposite end portions of the nozzle 40 (or the circular flow path 41 thereof)) provided so as to face the opposite end portions of the inner pipe 14. With this configuration, the vacuum 1 of the present embodiment switches between the discharge port 10B and the suction port 10A to which the pressurized wind fed by the nozzle 40 is ejected.

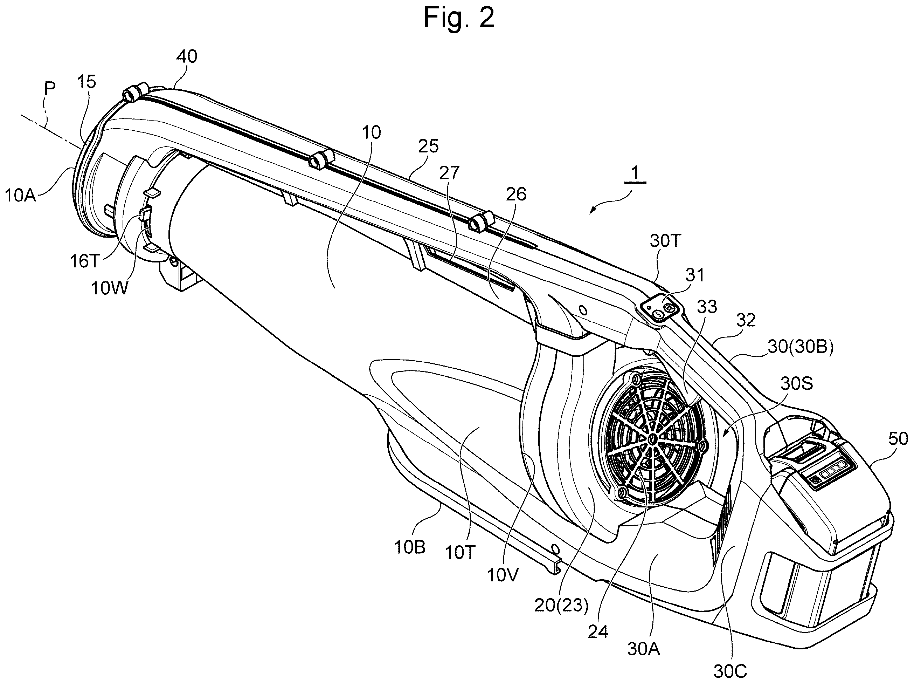

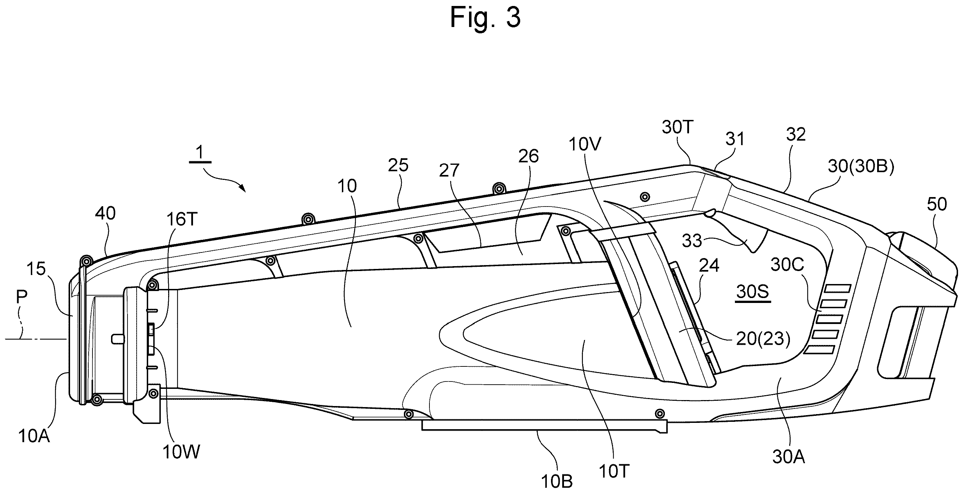

In the present embodiment, the turn portion 16 provided in the base end portion of the nozzle 40 (or the circular flow path 41 thereof) is configured to be rotatable about the central axis P of the pipe 10. In other words, the turn portion 16 is housed in the pipe 10 so as to be rotatable about the central axis P of the pipe 10. The front end portion of the turn portion 16 includes, in its inner circumferential portion, a helical groove, and the base end portion of the inner pipe 14 includes, in its outer circumferential portion, a projection that fits to the helical groove. The helical groove of the turn portion 16 and the projection of the inner pipe 14 form a cam mechanism that slides the inner pipe 14 relative to the circular flow path 41 according to the rotation of the turn portion 16. The turn portion 16 includes, on its periphery, an operating projection 16T that projects beyond an opening 10W circumferentially extending in the pipe 10 to allow the turn portion 16 to rotate relative to the pipe 10 (see, in particular, FIG. 2 and FIG. 3).

Note that the sliding configuration of sliding the inner pipe 14 relative to the circular flow path 41 is not limited to the illustrated example.

When the inner pipe 14 is slid toward the base end, the base end portion of the inner pipe 14 comes into close contact with (i.e., hermetically contacts) the turn portion 16, the base end of the circular flow path 41 is closed, the front end portion of the inner pipe 14 is separated from the turn portion 15, and as described above, a gap formed between the turn portion 15 and the inner pipe 14 (or the front end portion thereof) becomes the ejection port 42 configured to communicate with (i.e., open to) the inside of the pipe 10 in the circular flow path 41. The pressurized wind is ejected from the ejection port 42 along the inner surface of the pipe 10 (FIG. 6).

Meanwhile, when the inner pipe 14 is slid toward the front end, the front end portion of the inner pipe 14 comes into close contact with (i.e., hermetically contacts) the turn portion 15, the front end of the circular flow path 41 is closed, the base end portion of the inner pipe 14 is separated from the turn portion 16, and as described later, a gap formed between the turn portion 16 and the inner pipe 14 (or the base end portion thereof) becomes an ejection port 43 configured to communicate with (i.e., open to) the inside of the pipe 10 in the circular flow path 41. The pressurized wind is ejected from the ejection port 43 to the front end (suction port 10A) (FIG. 7).

FIG. 6 shows the switched state for the sucking work as already described. In this state, the inner pipe 14 is slid toward the base end, the base end portion of the inner pipe 14 is in contact with the turn portion 16 provided on the base end side of the circular flow path 41, and the front end portion of the inner pipe 14 is separated from the turn portion 15 provided on the front end side of the circular flow path 41. Accordingly, the base end of the circular flow path 41 is closed, and the pressurized wind is fed from the circular flow path 41 to the outside of the inner pipe 14, then passes between the turn portion 15 provided on the front end side of the circular flow path 41 and the inner pipe 14, turns toward the base end at around the front end portion of the inner pipe 14, enters the pipe 10 through the ejection port 42, and is ejected to the discharge port 10B along the inner periphery of the inner pipe 14. In this state, the turn portion 15 provided on the front end side of the circular flow path 41, that is, the front end of the pipe 10, is the suction port 10A, and suction flow is formed in the pipe 10 from the front end portion toward the base end portion of the pipe 10.

On the other hand, FIG. 7 shows the switched state for the blowing work. In this state, the inner pipe 14 is slid toward the front end, the front end portion of the inner pipe 14 is in contact with the turn portion 15 provided on the front end side of the circular flow path 41, and the base end portion of the inner pipe 14 is separated from the turn portion 16 provided on the base end side of the circular flow path 41. Accordingly, the front end of the circular flow path 41 is closed, and the pressurized wind is fed from the circular flow path 41 to the outside of the inner pipe 14, then passes between the turn portion 16 provided on the base end side of the circular flow path 41 and the inner pipe 14, turns toward the front end at around the base end portion of the inner pipe 14, enters the pipe 10 through the ejection port 43, and is ejected to the front end (suction port 10A) along the inner periphery of the inner pipe 14. In this state, the turn portion 15 provided on the front end side of the circular flow path 41, that is, the front end of the pipe 10, serves as a blowing port, and discharge flow is formed in the pipe 10 from the base end to the front end of the pipe 10.

As described above, the vacuum 1 according to the present embodiment becomes a working machine serving as a vacuum and a blower by incorporating a simple switching mechanism. In other words, the vacuum 1 according to the present embodiment can switch between the vacuum and the blower by simple switching operation. When used to clean up fallen leaves in a wide area, for example, the vacuum 1 according to the present embodiment is switched to the blower to gather the fallen leaves spread on the ground to some extent, and then switched to the vacuum to suck in the gathered fallen leaves or the like. By this means, it is possible to allow efficient collecting work with a single machine.

As described above, the vacuum 1 according to the present embodiment is a handheld electric vacuum configured to perform sucking work, including the pipe 10 including the suction port 10A at the front end (one end) and the discharge port 10B at the base end (the other end); the blower fan 20 provided outside the pipe 10 and driven by the electric motor 21; the pressure flow path 25 provided outside the pipe 10 (from the blower fan 20 to near the suction port 10A), and configured to feed pressurized wind generated by the blower fan 20 into the pipe 10 from around the pipe 10 near the suction port 10A, and to eject the pressurized wind to the discharge port 10B; the handle 30 provided outside the pipe 10 and near the discharge port 10B of the pipe 10, and configured to be held by a hand; and the battery 50 configured to supply the electric motor 21 with power. The pipe 10 (axially) extends along the axis (central axis P) from the front end to the base end and includes at the base end the bending portion 10T (the other opening thereof being the discharge port 10B) inclined (inclined forwardly) with respect to the axis (central axis P). The blower fan 20 is inclined forwardly along the bending portion 10T and disposed on the base end side of the bending portion 10T (or on the placement surface 10V thereof). The handle 30 is disposed between the lower side and the upper side of the blower fan 20 so as to form the space 30S on the base end side of the blower fan 20. The battery 50 is attached (along the opposing portion) to the opposing portion (vertical side portion 30C) on the base end side of the handle 30, the opposing portion (vertical side portion 30C) facing the blower fan 20 with the space 30S interposed therebetween. The opposing portion of the handle 30 and the battery 50 attached to the opposing portion are inclined (inclined backwardly) oppositely to the blower fan 20 (the bending portion 10T) with respect to the axis (central axis P). The upper length (near the upper side portion 30B) of the space 30S of the handle 30 is greater than the lower length (near the lower side portion 30A) thereof.

The handle 30 includes the lower side portion 30A extending from the lower side of the blower fan 20 to the base end, the upper side portion 30B extending from the upper side of the blower fan 20 to the base end, and the vertical side portion 30C extending from the base end portion of the lower side portion 30A to the base end portion of the upper side portion 30B to form the opposing portion facing the blower fan 20. The lower side portion 30A, the upper side portion 30B, and the vertical side portion 30C form the space 30S on the base end side of the blower fan 20.

The upper portion (the upper side portion 30B) of the handle 30 and the pressure flow path 25 are continuously formed.

The upper portion (the upper side portion 30B) of the handle 30 and the pressure flow path 25 are continuously formed in a straight line shape along the axis (central axis P).

The upper portion (the central portion of the upper side portion 30B) of the handle 30 includes the curved portion 30T projecting upward, and the front end of the curved portion 30T of the upper portion (the upper side portion 30B) of the handle 30 and the pressure flow path 25 are continuously formed in a straight line shape along the axis (central axis P).

The battery 50 is attached to the opposing portion (the vertical side portion 30C) of the handle 30 by sliding from the upper side to the lower side with an inclination opposite to an inclination of the blower fan 20 (the bending portion 10T) with respect to the axis (central axis P).

The control board (drive circuit) 51 of the blower fan 20 is housed in the lower portion (the lower side portion 30A) of the handle 30.

The operating member (operating lever 33) is provided in the upper portion (the upper side portion 30B) of the handle 30 and is configured to adjust the rotating speed of the electric motor 21 of the blower fan 20.

The connecting wall 26 connecting the pressure flow path 25 and the pipe 10 includes the through-hole 27 that allows a portion of the pressure flow path 25 (above the through-hole 27) to be used as a sub-handle to be held by a hand.

The pressure flow path 25 extends from the upper side of the blower fan 20 to near the suction port 10A of the pipe 10 (above thereof) and is inclined (inclined forwardly) with respect to the axis (central axis P) so as to come closer to the pipe 10 from the base end to the front end. The connecting wall 26 connecting the lower side of the pressure flow path 25 and the upper side of the pipe 10 includes the through-hole 27.

According to the present embodiment, the blower fan 20 is inclined forwardly along the bending portion 10T and disposed on the base end side of the bending portion 10T provided at the base end of the pipe 10. The opposing portion (vertical side portion 30C) of the handle 30 incorporating the battery 50, facing the blower fan 20 is inclined (inclined backwardly) oppositely to the blower fan 20. The upper length (near the grip portion) of the space 30S of the handle 30 formed on the base end side of the blower fan 20 is greater than the lower length thereof. Accordingly, even when the blower fan 20, the casing 23, the battery 50, and the like, which are heavy in weight, are placed near the handle 30, it is possible to ensure the space for the grip portion of the handle 30 without causing the structure to become more complicated or larger. Thus, it is possible to improve the operability and workability while reducing the likelihood of the structure becoming more complicated or larger.

In addition, the pressure flow path 25 configured to feed pressurized wind generated by the blower fan 20 to the nozzle 40 and the upper portion (upper side portion 30B) of the handle 30 are continuously formed. Accordingly, it is possible to simplify the overall configuration or to reduce the number of components.

In addition, the connecting wall 26 connecting the pressure flow path 25 and the pipe 10 includes the through-hole 27 to allow a portion of the pressure flow path 25 (above the through-hole 27) to be used as a sub-handle to be held by a hand. Accordingly, it is possible to further reduce the load on the operator during work, and to further improve the operability.

Although the embodiment of the present invention has been described in detail above with reference to the drawings, specific structures are not limited thereto, and any design changes that fall within the scope of the present invention, as defined by the appended claims, are encompassed by the scope of the present invention.

### DESCRIPTION OF SYMBOLS

- 1: Vacuum (handheld electric vacuum)
- 10: Pipe
- 10A: Suction port
- 10B: Discharge port
- 10T: Bending portion
- 14: Inner pipe
- 15: Turn portion
- 16: Turn portion
- 20: Blower fan
- 21: Electric motor
- 22: Fan
- 23: Casing
- 24: Sucking portion
- 25: Pressure flow path
- 26: Connecting wall
- 27: Through-hole
- 30: Handle
- 30A: Lower side portion (lower portion of handle)
- 30B: Upper side portion (upper portion of handle)
- 30C: Vertical side portion (opposing portion)
- 30S: Space
- 30T: Curved portion
- 31: Switch
- 32: Grip
- 33: Operating lever (operating member)
- 40: Nozzle
- 41: Circular flow path
- 42: Ejection port (sucking state)
- 43: Ejection port (blowing state)
- 50: Battery
- 51: Control board (drive circuit)
- P: Central axis

## Claims

1. A handheld electric vacuum device (1) configured to perform sucking work, comprising:
a pipe (10) including a suction port (10A) at a front end and a discharge port (10B) at a base end;
a blower fan (20) provided outside the pipe (10) and driven by an electric motor (21);
a pressure flow path element (25) provided outside the pipe (10), and configured to feed pressurized wind generated by the blower fan (20) into the pipe (10) from around the pipe (10) near the suction port (10A), and to eject the pressurized wind to the discharge port (10B);
a handle (30) provided outside the pipe (10) and near the discharge port (10B) of the pipe (10), and configured to be held by a hand; and
a battery (50) configured to supply the electric motor (21) with power,
wherein:
the pipe (10) extends along an axis from the front end to the base end and includes at the base end a bending portion (10T) inclined with respect to the axis;
the blower fan (20) is inclined forwardly along the bending portion (10T) and disposed on a placement surface (10V) of the bending portion (10T),
wherein the blower fan (20) is a centrifugal fan driven by the built-in electrical motor (21) and is disposed such that the driving shaft of the electrical motor is coaxial with the rotating shaft of the fan, and wherein a casing (23) of the blower fan is formed as a volute and is disposed along the placement surface (10V),
wherein
the handle (30) is disposed between a lower side and an upper side of the blower fan (20) so as to form a space (30S) on a base end side of the blower fan (20);
the battery (50) is attached to an opposing portion on a base end side of the handle (30), the opposing portion facing the blower fan (20) with the space (30S) interposed therebetween; and
the opposing portion of the handle (30) and the battery (50) attached to the opposing portion are inclined oppositely to the blower fan (20) with respect to the axis, and an upper length of the space (30S) of the handle (30) is greater than a lower length thereof, and
wherein wind sucked from a sucking portion (24) by the rotation of the fan (22) passes through the casing (23) and is fed, as compressed air, into a pressure flow path element (25) disposed outside of the pipe (10).

2. The handheld electric vacuum device (1) according to claim 1, wherein the handle (30) includes a lower side portion (30A) extending from the lower side of the blower fan (20) to a base end side of the handheld electric vacuum device (1), an upper side portion (30B) extending from the upper side of the blower fan (20) to the base end side of the handheld electric vacuum device (1), and a vertical side portion (30C) extending from a base end portion of the lower side portion (30A) to a base end portion of the upper side portion (30B) to form the opposing portion facing the blower fan (20), and the lower side portion (30A), the upper side portion (30B), and the vertical side portion (30C) form the space (30S) on the base end side of the blower fan (20).

3. The handheld electric vacuum device (1) according to claim 1, wherein an upper portion of the handle (30) and the pressure flow (25) path are continuously formed.

4. The handheld electric vacuum device (1) according to claim 3, wherein the upper portion of the handle (30) and the pressure flow path element (25) are continuously formed in a straight line shape along the axis.

5. The handheld electric vacuum device (1) according to claim 4, wherein the upper portion of the handle (30) includes a curved portion (30T) projecting upward, and a front end of the curved portion (30T) of the upper portion of the handle (30) and the pressure flow path element (25) are continuously formed in a straight line shape along the axis.

6. The handheld electric vacuum device (1) according to claim 1, wherein the battery (50) is attached to the opposing portion of the handle (30) by sliding from an upper side to a lower side with an inclination opposite to an inclination of the blower fan (20) with respect to the axis.

7. The handheld electric vacuum device (1) according to claim 1, wherein a control board (51) of the blower fan (20) is housed in a lower portion of the handle (30).

8. The handheld electric vacuum device (1) according to claim 1, wherein an operating member (33) is provided in an upper portion of the handle (30) and is configured to adjust a rotating speed of the electric motor (21) of the blower fan (20).

9. The handheld electric vacuum device (1) according to claim 1, wherein a connecting wall (26) connecting the pressure flow path element (25) and the pipe (10) includes a through-hole (27) that allows a portion of the pressure flow path element (25) to be used as a sub-handle to be held by a hand.

10. The handheld electric vacuum device (1) according to claim 9, wherein:
the pressure flow path element (25) extends from the upper side of the blower fan (20) to near the suction port (10A) of the pipe (10) and is inclined with respect to the axis so as to come closer to the pipe (10) from the base end to the front end; and
the connecting wall (26) connecting a lower side of the pressure flow path element (25) and an upper side of the pipe (10) includes the through-hole (27).

## Patentansprüche

1. Handgeführtes elektrisches Sauggerät (1), ausgebildet, um Saugarbeit durchzuführen, umfassend:
ein Rohr (10), enthaltend eine Ansaugöffnung (10A) an einem Vorderende und eine Auslassöffnung (10B) an einem Basisende;
ein Gebläserad (20), bereitgestellt außerhalb des Rohrs (10) und angetrieben durch einen Elektromotor (21);
ein Druckströmungswegelement (25), bereitgestellt außerhalb des Rohrs (10) und ausgebildet, um durch das Gebläserad (20) erzeugten Druckwind nahe der Ansaugöffnung (10A) von um das Rohr (10) in das Rohr (10) einzuspeisen und den Druckwind zu der Auslassöffnung (10B) auszustoßen;
einen Griff (30), bereitgestellt außerhalb des Rohrs (10) und nahe der Auslassöffnung (10B) des Rohrs (10) und ausgebildet, um von einer Hand gehalten zu werden; und
eine Batterie (50), ausgebildet, um den Elektromotor (21) mit Strom zu versorgen,
wobei:
sich das Rohr (10) entlang einer Achse von dem Vorderende zu dem Basisende erstreckt und an dem Basisende einen in Bezug auf die Achse geneigten Biegeabschnitt (10T) enthält;
das Gebläserad (20) entlang des Biegeabschnitts (10T) nach vorne geneigt und auf einer Auflagefläche (10V) des Biegeabschnitts (10T) angeordnet ist;
wobei das Gebläserad (20) ein durch den eingebauten Elektromotor (21) angetriebenes Radialrad ist und derart angeordnet ist, dass die Antriebswelle des Elektromotors (21) koaxial mit der Drehwelle des Lüfters (22) ist, und wobei ein Gehäuse (23) des Gebläserads (20) spiralförmig ausgebildet und entlang der Auflagefläche (10V) angeordnet ist,
wobei
der Griff (30) zwischen einer Unterseite und einer Oberseite des Gebläserads (20) angeordnet ist, um einen Zwischenraum (30S) auf einer Basisendseite des Gebläserads (20) auszubilden;
die Batterie (50) an einem gegenüberliegenden Abschnitt auf einer Basisendseite des Griffs (30) angebracht ist, wobei der gegenüberliegende Abschnitt dem Gebläserad (20) mit dem dazwischenliegenden Zwischenraum (30S) zugewandt ist; und
der gegenüberliegende Abschnitt des Griffs (30) und die an dem gegenüberliegenden Abschnitt angebrachte Batterie (50) in Bezug auf die Achse entgegengesetzt zu dem Gebläserad (20) geneigt sind und eine obere Länge des Zwischenraums (30S) des Griffs (30) größer als eine untere Länge davon ist, und
wobei durch die Drehung des Rads (22) von einem Ansaugabschnitt (24) angesaugter Wind durch das Gehäuse (23) strömt und als Druckluft in ein außerhalb des Rohrs (10) angeordnetes Druckströmungswegelement (25) eingespeist wird.

2. Handgeführtes elektrisches Sauggerät (1) gemäß Anspruch 1, wobei der Griff (30) einen sich von der Unterseite des Gebläserads (20) zu einer Basisendseite des handgeführten elektrischen Sauggeräts (1) erstreckenden Unterseitenabschnitt (30A), einen sich von der Oberseite des Gebläserads (20) zu der Basisendseite des handgeführten elektrischen Sauggeräts (1) erstreckenden Oberseitenabschnitt (30B), und einen sich von einem Basisendabschnitt des Unterseitenabschnitts (30A) zu einem Basisendabschnitt des Oberseitenabschnitts (30B) erstreckenden vertikalen Seitenabschnitt (30C) enthält, um den dem Gebläserad (20) zugewandten gegenüberliegenden Abschnitt auszubilden, und der Unterseitenabschnitt (30A), der Oberseitenabschnitt (30B) und der vertikale Seitenabschnitt (30C) den Zwischenraum (30S) auf der Basisendseite des Gebläserads (20) ausbilden.

3. Handgeführtes elektrisches Sauggerät (1) gemäß Anspruch 1, wobei ein oberer Abschnitt des Griffs (30) und der Druckströmungsweg (25) durchgehend ausgebildet sind.

4. Handgeführtes elektrisches Sauggerät (1) gemäß Anspruch 3, wobei der obere Abschnitt des Griffs (30) und das Druckströmungswegelement (25) entlang der Achse durchgehend in einer geradlinigen Form ausgebildet sind.

5. Handgeführtes elektrisches Sauggerät (1) gemäß Anspruch 4, wobei der obere Abschnitt des Griffs (30) einen nach oben vorstehenden gekrümmten Abschnitt (30T) enthält und ein Vorderende des gekrümmten Abschnitts (30T) des oberen Abschnitts des Griffs (30) und das Druckströmungswegelement (25) entlang der Achse durchgehend in einer geradlinigen Form ausgebildet sind.

6. Handgeführtes elektrisches Sauggerät (1) gemäß Anspruch 1, wobei die Batterie (50) durch Verschieben von einer Oberseite zu einer Unterseite mit einer einer Neigung des Gebläserads (20) entgegengesetzten Neigung in Bezug auf die Achse an dem gegenüberliegenden Abschnitt des Griffs (30) angebracht ist.

7. Handgeführtes elektrisches Sauggerät (1) gemäß Anspruch 1, wobei eine Steuerplatine (51) des Gebläserads (20) in einem unteren Abschnitt des Griffs (30) untergebracht ist.

8. Handgeführtes elektrisches Sauggerät (1) gemäß Anspruch 1, wobei ein Betätigungsglied (33) in einem oberen Abschnitt des Griffs (30) bereitgestellt und ausgebildet ist, um eine Drehzahl des Elektromotors (21) des Gebläserads (20) einzustellen.

9. Handgeführtes elektrisches Sauggerät (1) gemäß Anspruch 1, wobei eine das Druckströmungswegelement (25) und das Rohr (10) verbindende Verbindungswand (26) ein Durchgangsloch (27) enthält, das ermöglicht, einen Abschnitt des Druckströmungswegelements (25) als einen von einer Hand zu haltenden Nebengriff zu verwenden.

10. Handgeführtes elektrisches Sauggerät (1) gemäß Anspruch 9, wobei:
sich das Druckströmungswegelement (25) von der Oberseite des Gebläserads (20) bis nahe der Ansaugöffnung (10A) des Rohrs (10) erstreckt und in Bezug auf die Achse derart geneigt ist, dass es sich von dem Basisende zu dem Vorderende dem Rohr (10) annähert; und
die eine Unterseite des Druckströmungswegelements (25) und eine Oberseite des Rohrs (10) verbindende Verbindungswand (26) das Durchgangsloch (27) enthält.

## Revendications

1. Dispositif d'aspiration électrique portatif (1) configuré pour effectuer un travail d'aspiration, comprenant :
un tube (10) comprenant un orifice d'aspiration (10A) au niveau d'une extrémité avant et un orifice de refoulement (10B) au niveau d'une extrémité de base ;
un ventilateur soufflant (20) prévu à l'extérieur du tube (10) et entraîné par un moteur électrique (21) ;
un élément de trajet d'écoulement sous pression (25) prévu à l'extérieur du tube (10) et configuré pour acheminer de l'air sous pression, généré par le ventilateur soufflant (20), dans le tube (10) depuis la périphérie du tube (10) à proximité de l'orifice d'aspiration (10A), et pour éjecter l'air sous pression vers l'orifice de refoulement (10B) ;
une poignée (30) prévue à l'extérieur du tube (10) et à proximité de l'orifice de refoulement (10B) du tube (10), et configurée pour être tenue à la main ; et
une batterie (50) configurée pour alimenter le moteur électrique (21) en énergie,
dans lequel :
le tube (10) s'étend le long d'un axe depuis l'extrémité avant jusqu'à l'extrémité de base et comprend, au niveau de l'extrémité de base, une partie coudée (10T) inclinée par rapport à l'axe ;
le ventilateur soufflant (20) est incliné vers l'avant le long de la partie coudée (10T) et est disposé sur une surface de mise en place (10V) de la partie coudée (10T),
dans lequel le ventilateur soufflant (20) est un ventilateur centrifuge entraîné par le moteur électrique intégré (21) et est disposé de sorte que l'arbre d'entraînement du moteur électrique soit coaxial à l'arbre de rotation du ventilateur, et dans lequel un carter (23) du ventilateur soufflant est formé en volute et est disposé le long de la surface de mise en place (10V),
dans lequel
la poignée (30) est disposée entre un côté inférieur et un côté supérieur du ventilateur soufflant (20) de manière à former un espace (30S) du côté d'extrémité de base du ventilateur soufflant (20) ;
la batterie (50) est fixée à une partie opposée du côté d'extrémité de base de la poignée (30), la partie opposée faisant face au ventilateur soufflant (20) avec l'espace (30S) interposé entre eux ; et
la partie opposée de la poignée (30) et la batterie (50) fixée à ladite partie opposée sont inclinées à l'opposé du ventilateur soufflant (20) par rapport à l'axe, et une longueur supérieure de l'espace (30S) de la poignée (30) est supérieure à une longueur inférieure de celui-ci, et
dans lequel l'air aspiré depuis une partie d'aspiration (24) par la rotation du ventilateur (22) traverse le carter (23) et est acheminé, sous forme d'air comprimé, dans un élément de trajet d'écoulement sous pression (25) disposé à l'extérieur du tube (10).

2. Dispositif d'aspiration électrique portatif (1) selon la revendication 1, dans lequel la poignée (30) comprend une partie latérale inférieure (30A) s'étendant depuis le côté inférieur du ventilateur soufflant (20) jusqu'au côté d'extrémité de base du dispositif d'aspiration électrique portatif (1), une partie latérale supérieure (30B) s'étendant depuis le côté supérieur du ventilateur soufflant (20) jusqu'au côté d'extrémité de base du dispositif d'aspiration électrique portatif (1), et une partie latérale verticale (30C) s'étendant depuis une partie d'extrémité de base de la partie latérale inférieure (30A) jusqu'à une partie d'extrémité de base de la partie latérale supérieure (30B) pour former la partie opposée faisant face au ventilateur soufflant (20), et la partie latérale inférieure (30A), la partie latérale supérieure (30B) et la partie latérale verticale (30C) forment l'espace (30S) du côté d'extrémité de base du ventilateur soufflant (20).

3. Dispositif d'aspiration électrique portatif (1) selon la revendication 1, dans lequel une partie supérieure de la poignée (30) et le trajet d'écoulement sous pression (25) sont formés de manière continue.

4. Dispositif d'aspiration électrique portatif (1) selon la revendication 3, dans lequel la partie supérieure de la poignée (30) et l'élément de trajet d'écoulement sous pression (25) sont formés de manière continue selon une forme rectiligne le long de l'axe.

5. Dispositif d'aspiration électrique portatif (1) selon la revendication 4, dans lequel la partie supérieure de la poignée (30) comprend une partie incurvée (30T) faisant saillie vers le haut, et une extrémité avant de la partie incurvée (30T) de la partie supérieure de la poignée (30) et l'élément de trajet d'écoulement sous pression (25) sont formés de manière continue selon une forme rectiligne le long de l'axe.

6. Dispositif d'aspiration électrique portatif (1) selon la revendication 1, dans lequel la batterie (50) est fixée à la partie opposée de la poignée (30) par glissement d'un côté supérieur vers un côté inférieur, avec une inclinaison opposée à une inclinaison du ventilateur soufflant (20) par rapport à l'axe.

7. Dispositif d'aspiration électrique portatif (1) selon la revendication 1, dans lequel une carte de commande (51) du ventilateur soufflant (20) est logée dans une partie inférieure de la poignée (30).

8. Dispositif d'aspiration électrique portatif (1) selon la revendication 1, dans lequel un organe d'actionnement (33) est prévu dans une partie supérieure de la poignée (30) et est configuré pour régler une vitesse de rotation du moteur électrique (21) du ventilateur soufflant (20).

9. Dispositif d'aspiration électrique portatif (1) selon la revendication 1, dans lequel une paroi de liaison (26) reliant l'élément de trajet d'écoulement sous pression (25) et le tube (10) comprend un trou traversant (27) qui permet à une partie de l'élément de trajet d'écoulement sous pression (25) d'être utilisée comme poignée auxiliaire à tenir à la main.

10. Dispositif d'aspiration électrique portatif (1) selon la revendication 9, dans lequel :
l'élément de trajet d'écoulement sous pression (25) s'étend depuis le côté supérieur du ventilateur soufflant (20) jusqu'à proximité de l'orifice d'aspiration (10A) du tube (10) et est incliné par rapport à l'axe de manière à se rapprocher du tube (10) depuis l'extrémité de base jusqu'à l'extrémité avant ; et
la paroi de liaison (26), reliant un côté inférieur de l'élément de trajet d'écoulement sous pression (25) et un côté supérieur du tube (10), comprend le trou traversant (27).
